# EUROPEAN PATENT APPLICATION

(11) **EP 2 985 569 A1**
(43) Date of publication of application: **17.02.2016**
(21) Application number: 14782142.5
(22) Date of filing: 02.04.2014
(51) Int. Cl.: G01C 21/26, E05B 49/00, G08G 1/005

(54) **ELECTRONIC KEY, VEHICLE-MOUNTED DEVICE, GUIDANCE DEVICE, AND CAR-FINDER SYSTEM**

(30) Priority: 09.04.2013 JP 2013081341
(71) Applicant: Panasonic Intellectual Property Management Co., Ltd., Osaka-shi, Osaka 540-6207 (JP)
(72) Inventor: NAKAYA, Satoshi, Osaka 540-6207 (JP)
(74) Representative: Schwabe - Sandmair - Marx
(86) International application number: PCT/JP2014/001924
(87) International publication number: WO 2014/167805

(57) **Abstract**

An electronic key capable of using a simple system configuration to report information pertaining to a vehicle parking or stopping position. An electronic key (300) is an electronic key used to lock and unlock a vehicle (500) and has an electronic-key-side reception unit for receiving, from a vehicle-mounted device (200) mounted in the vehicle (500), vehicle-position information indicating the position at which the vehicle (500) is parked or stopped; an electronic-key-side memory unit for storing the received vehicle-position information; and an electronic-key-side transmission unit for transmitting the vehicle-position information to a guidance device (400) capable of presenting position information.

## Description

### Technical Field

The present invention relates to a car finder system.

### Background Art

In recent years, car finder systems have been attracting attention from vehicle users. The term "car finder system" refers to a system that presents, to a vehicle user (hereinafter simply referred to as "user"), information indicating where the vehicle is parked/stopped, and guides the user to the parking/stopping position (e.g., see Patent Literature (hereinafter, referred to as "PTL") 1 and PTL 2).

In the car finder system described in PTL 1, an onboard apparatus acquires information indicating the parking/stopping position of the vehicle and transmits the information to the user's portable terminal via a communication center. The portable terminal provides route guidance from the user's position to the parking/stopping position of the vehicle based on the received information.

In the car finder system disclosed in PTL 2, an electronic key of a vehicle includes an orientation sensor and an acceleration sensor, and calculates a user's position relative to the parking/stopping position of the vehicle. The electronic key receives position information from an external apparatus and corrects the relative position of the user as appropriate. The electronic key then displays an arrow on a display apparatus provided in the electronic key and guides the user to the parking/stopping position of the vehicle.

The related arts can guide the user to the parking/stopping position of the vehicle. As such, the car finder system is quite convenient in a situation in which it is difficult to find the parking/stopping position of a vehicle in an extensive parking area, for example.

### Citation List

### Patent Literature

PTL 1 Japanese Patent Application Laid-Open No. 2007-241472
PTL2 Japanese Patent Application Laid-Open No. 2011-27425

### Summary of Invention

### Technical Problem

However, the above-described related arts involve the following problems.

The technique described in PTL 1 needs to set a communication center and build a system that allows the communication center, an onboard apparatus and a portable terminal to communicate with each other, and needs to register the onboard apparatus and the portable terminal with the communication center. That is, implementing the technique described in PTL 1 requires an enormous system cost.

Furthermore, the technique disclosed in PTL 2 requires the electronic key to be equipped with various sensors and a display apparatus. That is, the technique described in PTL 2 results in an increase in the size and weight of the electronic key and also an increase in the electronic key cost.

An object of the present invention is to provide an electronic key, an onboard apparatus, a guidance apparatus and a car finder system enabling an announcement of information relating to a parking/stopping position of a vehicle using a simple system configuration.

### Solution to Problem

The electronic key according to this disclosure is an electronic key used for locking and unlocking a vehicle, the key including: an electronic-key-side receiving section that receives vehicle position information indicating a position at which the vehicle is parked/stopped from an onboard apparatus to be mounted on the vehicle; an electronic-key-side storage section that stores the received vehicle position information; and an electronic-key-side transmitting section that transmits the vehicle position information stored in the electronic-key-side storage section to a guidance apparatus capable of presenting position information.

The onboard apparatus according to this disclosure is an onboard apparatus that communicates with the electronic key, the apparatus including a vehicle-side transmitting section that transmits the vehicle position information to the electronic key at first timing at which the parking/stopping position of the vehicle is established.

The guidance apparatus according to this disclosure is a guide apparatus that communicates with the electronic key, the apparatus including: a guidance-apparatus-side transmitting section that transmits, to the electronic key, a request signal for requesting transmission of the vehicle position information at predetermined second timing; a guidance-apparatus-side receiving section that receives the vehicle position information from the electronic key; and an information presenting section that presents information relating to the vehicle position based on a position indicated in the vehicle position information received by the guidance-apparatus-side receiving section.

A car finder system according to this disclosure includes: an onboard apparatus to be mounted on a vehicle; an electronic key used for locking and unlocking the vehicle; and a guidance apparatus that is capable of being carried around or accessible by a user carrying the electronic key, in which the onboard apparatus includes: a vehicle position acquiring section that acquires vehicle position information indicating a position at which the vehicle is parked/stopped; and a vehicle-side transmitting section that transmits the acquired vehicle position information to the electronic key, the electronic key includes: an electronic-key-side receiving section that receives the vehicle position information transmitted from the onboard apparatus; an electronic-key-side storage section that stores the received vehicle position information; and an electronic-key-side transmitting section that transmits the vehicle position information stored in the electronic-key-side storage section to the guidance apparatus, and the guidance apparatus includes: a guidance-apparatus-side receiving section that receives the vehicle position information transmitted from the electronic key; and an information presenting section that presents information relating to the vehicle position based on the position indicated in the vehicle position information received by the guidance-apparatus-side receiving section.

### Advantageous Effects of Invention

According to the present disclosure, an announcement of information relating to a parking/stopping position of a vehicle can be made using a simple system configuration.

### Brief Description of Drawings

FIG. 1 is a system configuration diagram illustrating an exemplary configuration of a car finder system according to an embodiment;
FIG. 2 is a block diagram illustrating an exemplary configuration of an onboard apparatus according to the present embodiment;
FIG. 3 is a block diagram illustrating an exemplary configuration of an electronic key according to the present embodiment;
FIG. 4 is a block diagram illustrating an exemplary configuration of a guidance apparatus according to the present embodiment;
FIG. 5 is a flowchart illustrating an exemplary operation of the onboard apparatus according to the present embodiment;
FIG. 6 is a flowchart illustrating an exemplary operation of the electronic key according to the present embodiment;
FIG. 7 is a flowchart illustrating an exemplary operation of the guidance apparatus according to the present embodiment;
FIG. 8 is a diagram illustrating a first example of guidance information displayed on the guidance apparatus according to the present embodiment;
FIG. 9 is a diagram illustrating a second example of guidance information displayed on the guidance apparatus according to the present embodiment;
FIG. 10 is a diagram illustrating a third example of guidance information displayed on the guidance apparatus according to the present embodiment; and
FIG. 11 is a diagram illustrating a fourth example of guidance information displayed on the guidance apparatus according to the present embodiment.

### Description of Embodiment

Hereinafter, an embodiment of the present invention will be described in detail with reference to the accompanying drawings.

### <System Configuration>

First, a system configuration of a car finder system according to the present embodiment will be described.

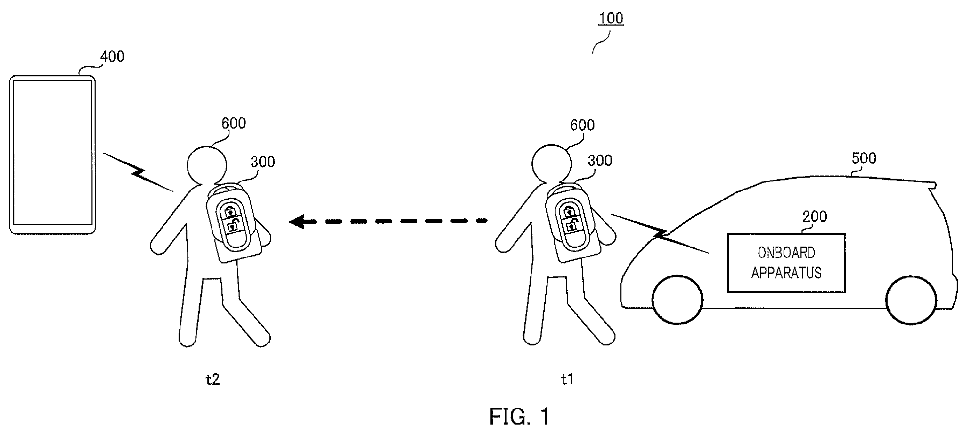

FIG. 1 is a system configuration diagram illustrating an exemplary configuration of a car finder system according to the present embodiment.

In FIG. 1, car finder system 100 includes onboard apparatus 200, electronic key 300, and guidance apparatus 400.

Onboard apparatus 200 is an apparatus mounted on vehicle 500. Components in onboard apparatus 200 are mutually connected via a network.

Electronic key 300 is a key used for locking and unlocking vehicle 500. In the present embodiment, electronic key 300 is a vehicle key (FOB) to lock/unlock the doors of vehicle 500 and start/stop the engine of vehicle 500 (hereinafter simply referred to as "engine") using a combination of a predetermined near-field radio communication and a mechanical key. As a near-field radio communication scheme, a communication scheme such as NFC (near-field communication) or Bluetooth (registered trademark) can be adopted.

Guidance apparatus 400 is an apparatus that can be carried around or that is accessible by user 600 who carries electronic key 300. In the present embodiment, guidance apparatus 400 is a portable terminal that can be carried by user 600, and more specifically, a smartphone of user 600.

Car finder system 100 is a system that guides the user to a parking/stopping position of vehicle 500 when user 600 is away from vehicle 500.

For this purpose, onboard apparatus 200 transmits vehicle position information to electronic key 300 at first timing (shown by t1 in the diagram) which is immediately before electronic key 300 is carried away from vehicle 500. Here, the vehicle position information is information indicating the position at which vehicle 500 is parked/stopped.

Electronic key 300 stores the vehicle position information received from onboard apparatus 200. That is, electronic key 300 with the vehicle position information stored therein is carried by user 600. Electronic key 300 transmits the stored vehicle position information to guidance apparatus 400 at second timing (shown by t2 in the diagram) optionally determined by user 600 via near-field radio communication. Note that such transmission is preferably carried out in a passive mode, but transmission may be carried out in an active mode.

Guidance apparatus 400 receives the vehicle position information transmitted from electronic key 300 and presents guidance information. Here, the guidance information is information indicating a positional relationship between the position indicated by vehicle position information and the position of user 600 (that is, position of guidance apparatus 400). User 600 can know the route to the parking/stopping position of vehicle 500 and can speedily return to vehicle 500 based on this guidance information.

User 600 who parks/stops vehicle 500 and leaves vehicle 500 normally carries electronic key 300. That is, user 600 is ready to use the vehicle position information anytime via guidance apparatus 400.

Electronic key 300 transmits the vehicle position information to guidance apparatus 400 via near-field radio communication. For this reason, the power required for the operation of electronic key 300 can be less.

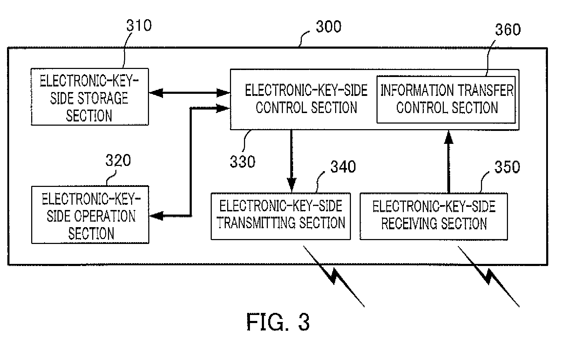

Furthermore, suppose that electronic key 300 originally has an information storage function and a near-field radio communication function, for example. In this case, these functions can be used to transmit/receive vehicle position information. That is, electronic key 300 can be implemented with a minor change which is to add a receiving section for receiving vehicle position information (see electronic-key-side receiving section 350, FIG. 3 which will be described later) and a control section (see information transfer control section 360, FIG. 3 which will be described later) for controlling a transfer of vehicle position information to the electronic key having such information storage function and near-field radio communication function. Moreover, the size and weight of electronic key 300 can be limited to substantially the same levels of the original electronic key. Note that when electronic key 300 originally includes a CPU (central processing unit), the above-described control section can be implemented with a minor change which is to add a control program thereto.

Moreover, vehicle keys (mechanical keys) not including the near-field radio communication function need only a minor change which is to further add a near-field radio communication circuit and an information storage section thereto.

Note that electronic key 300 itself does not have any function of guiding the user to the vehicle position of vehicle 500 based on vehicle position information stored in electronic key 300 as described above. Guidance is made by guidance apparatus 400 which is an external apparatus as described above. This makes it possible to simplify the configuration of electronic key 300. As guidance apparatus 400, there are many terminal devices that can implement the guidance function such as a mobile phone set in addition to the above-described smartphone. Therefore, there is not much necessity for providing electronic key 300 with the guidance function redundant with such a device.

Car finder system 100 need not provide a communication center or the like separately as in the case of the related art or provide electronic key 300 with various sensors, and thus can further reduce the communication cost.

Therefore, according to such car finder system 100, an announcement of information relating to the parking/stopping position of vehicle 500 can be made using a simple system configuration.

### <Configuration of Each Apparatus>

Next, the configuration of each apparatus of car finder system 100 will be described.

### <Configuration of Onboard apparatus>

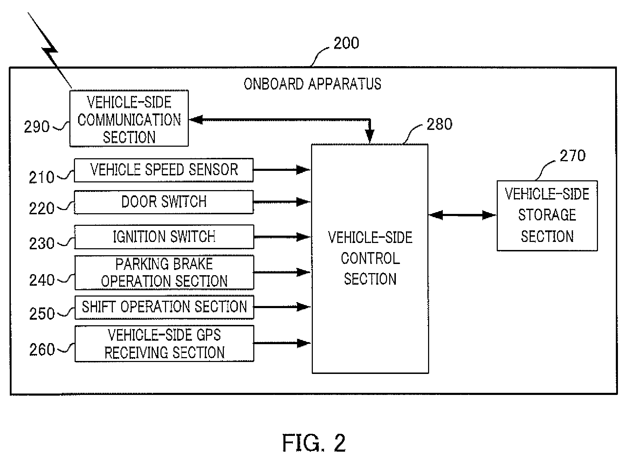

FIG. 2 is a block diagram illustrating an exemplary configuration of onboard apparatus 200.

In FIG. 2, onboard apparatus 200 includes vehicle speed sensor 210, door switch 220, ignition switch 230, parking brake operation section 240, shift operation section 250, vehicle-side GPS receiving section 260, vehicle-side storage section 270, vehicle-side control section 280, and vehicle-side communication section 290.

Vehicle speed sensor 210 detects a speed of vehicle 500 (hereinafter simply referred to as "vehicle speed") from the number of revolutions of wheels of vehicle 500 or the like and outputs the detection result to vehicle-side control section 280.

Door switch 220 detects an opening/closing state of the doors from a contact state between the doors (hereinafter simply referred to as "door") of vehicle 500 and the body of vehicle 500 and outputs the detection result to vehicle-side control section 280.

Ignition switch 230 receives an operation of starting/stopping the engine of vehicle 500 via electronic key 300. Ignition switch 230 outputs operation contents to vehicle-side control section 280 every time the operation is performed.

Parking brake operation section 240 receives an operation of switching the effective/not-effective state of the parking brake of vehicle 500 from the driver and outputs operation contents to vehicle-side control section 280 every time the switching operation is performed.

Shift operation section 250 receives an operation of switching the shift position of vehicle 500 from the driver and outputs operation contents to vehicle-side control section 280 every time the switching operation is performed.

Vehicle-side GPS receiving section 260 receives a GPS signal, detects the current position (e.g., latitude and longitude) of vehicle 500 and outputs the detection result to vehicle-side control section 280. In the present embodiment, vehicle-side GPS receiving section 260 detects a three-dimensional position using a sensor (not shown) that can detect altitude, such as an air pressure sensor or a gyro sensor together. Note that the detection result obtained when vehicle 500 is parked/stopped becomes vehicle position information indicating the position where vehicle 500 is parked/stopped.

Vehicle-side storage section 270 is a storage medium such as a flash memory and is used by vehicle-side control section 280. More specifically, vehicle-side storage section 270 stores vehicle position information received from vehicle-side control section 280.

Vehicle-side control section 280 controls the operation of vehicle 500 and the operations of the above-described components of onboard apparatus 200. More specifically, vehicle-side control section 280 causes vehicle-side storage section 270 to store the detection result of vehicle-side GPS receiving section 260. Vehicle-side control section 280 determines whether or not timing is first timing at which the parking/stopping position of vehicle 500 is confirmed from the information received from vehicle speed sensor 210, door switch 220, ignition switch 230, parking brake operation section 240, and shift operation section 250. Vehicle-side control section 280 then reads the latest detection result (that is, vehicle position information) of vehicle-side GPS receiving section 260 stored in vehicle-side storage section 270 at the first timing and transmits the latest detection result to electronic key 300 using vehicle-side communication section 290 which will be described later.

Here, the first timing is assumed to be timing at which predetermined conditions are satisfied. Here, the predetermined conditions are conditions that include at least one of conditions that the vehicle speed is reduced to a predetermined value or below, that the engine has stopped, that vehicle 500 has been locked from outside by electronic key 300, that the parking brake has become effective and that the shift position has become a parking position. Note that in order to determine whether or not vehicle 500 has been locked from outside by electronic key 300, an apparatus for detecting the position of electronic key 300 during locking is further necessary.

Vehicle-side communication section 290 is a communication circuit that performs near-field radio communication with at least electronic key 300.

Note that as is clear from the above description, vehicle-side GPS receiving section 260 constitutes a vehicle position acquiring section of the present invention, vehicle-side control section 280 constitutes a vehicle-side timing detection section of the present invention and vehicle-side communication section 290 constitutes a vehicle-side transmitting section of the present invention.

### <Configuration of Electronic Key>

FIG. 3 is a block diagram illustrating an exemplary configuration of electronic key 300.

In FIG. 3, electronic key 300 includes electronic-key-side storage section 310, electronic-key-side operation section 320, electronic-key-side control section 330, electronic-key-side transmitting section 340, electronic-key-side receiving section 350, and information transfer control section 360. Note that information transfer control section 360 may be provided as part of electronic-key-side control section 330 or may also be provided separately from electronic-key-side control section 330.

Electronic-key-side storage section 310 is a storage medium such as a flash memory and used by electronic-key-side control section 330. More specifically, electronic-key-side storage section 310 stores identification information necessary for locking and unlocking the doors of vehicle 500 beforehand. In the present embodiment, electronic-key-side storage section 310 further stores vehicle position information received from information transfer control section 360 which will be described later.

Electronic-key-side operation section 320 is made up of, for example, a plurality of key switches and receives an operation for locking vehicle 500 from the user. Electronic-key-side operation section 320 notifies electronic-key-side control section 330 of operation contents every time the operation is performed.

According to the operation performed by electronic-key-side operation section 320, electronic-key-side control section 330 transmits the identification information and information indicating the operation contents stored in electronic-key-side storage section 310 to vehicle 500 using electronic-key-side transmitting section 340 which will be described later.

Electronic-key-side transmitting section 340 is a transmission circuit for transmitting a radio signal and used by electronic-key-side control section 330. More specifically, electronic-key-side transmitting section 340 transmits the above-described identification information and operation content to the vehicle control apparatus of vehicle 500 using a radio signal. In the present embodiment, electronic-key-side transmitting section 340 is used by information transfer control section 360 which will be described later and transmits vehicle position information to guidance apparatus 400 via near-field radio communication.

Electronic-key-side receiving section 350 is a receiving circuit for receiving a radio signal. More specifically, electronic-key-side receiving section 350 receives vehicle position information transmitted from onboard apparatus 200 and outputs the vehicle position information to information transfer control section 360 which will be described later. Electronic-key-side receiving section 350 receives a request signal periodically transmitted from guidance apparatus 400 using a near-field radio signal and outputs the request signal to information transfer control section 360 which will be described later.

Information transfer control section 360 causes electronic-key-side storage section 310 to store the vehicle position information received by electronic-key-side receiving section 350. Information transfer control section 360 transmits the vehicle position information stored in electronic-key-side storage section 310 to guidance apparatus 400 at second timing optionally determined by the user using electronic-key-side transmitting section 340.

Here, the second timing is assumed to be timing at which electronic-key-side receiving section 350 receives a request signal from guidance apparatus 400 when the user brings electronic key 300 closer to guidance apparatus 400. That is, the second timing is timing when electronic key 300 comes closer to guidance apparatus 400 within a predetermined distance therefrom. Every time electronic-key-side receiving section 350 receives a request signal, electronic-key-side receiving section 350 notifies electronic-key-side control section 330 of the received request signal.

### <Configuration of Guidance Apparatus>

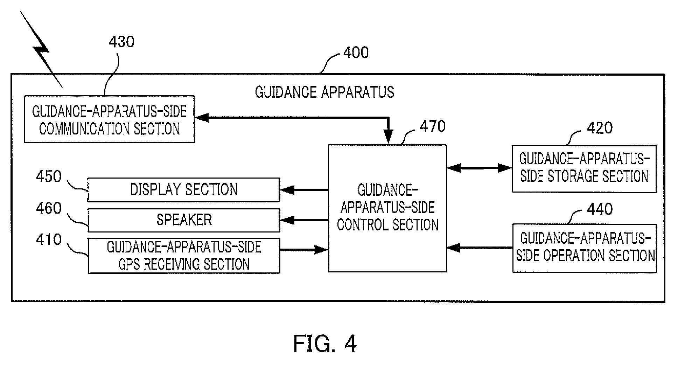

FIG. 4 is a block diagram illustrating an exemplary configuration of guidance apparatus 400.

In FIG. 4, guidance apparatus 400 includes guidance-apparatus-side GPS receiving section 410, guidance-apparatus-side storage section 420, guidance-apparatus-side communication section 430, guidance-apparatus-side operation section 440, display section 450, speaker 460, and guidance-apparatus-side control section 470.

Guidance-apparatus-side GPS receiving section 410 receives a GPS signal, detects the current position of guidance apparatus 400 (that is, the current position of user 600) and outputs the detection result to guidance-apparatus-side control section 470. In the present embodiment, guidance-apparatus-side GPS receiving section 410 detects the three-dimensional position using a sensor capable of detecting altitude (not shown) such as an air pressure sensor or a gyro sensor together.

Guidance-apparatus-side storage section 420 is a storage medium such as a flash memory and is used by guidance-apparatus-side control section 470. More specifically, guidance-apparatus-side storage section 420 stores the user's position and vehicle position information received from guidance-apparatus-side control section 470.

Guidance-apparatus-side communication section 430 is a communication circuit that performs near-field radio communication with electronic key 300. When vehicle position information is transmitted over a near-field from electronic key 300, guidance-apparatus-side communication section 430 receives the vehicle position information and outputs the received vehicle position information to guidance-apparatus-side control section 470.

Guidance-apparatus-side operation section 440 is an input interface such as a touch panel integrated with display section 450 which will be described later. Guidance-apparatus-side operation section 440 receives a presentation requesting operation that requests presentation of guidance information from user 600. Every time the presentation requesting operation is performed, guidance-apparatus-side operation section 440 notifies guidance-apparatus-side control section 470 of the presentation requesting operation.

Display section 450 is a display apparatus such as a liquid crystal display panel and is used by guidance-apparatus-side control section 470. More specifically, display section 450 displays the guidance information inputted from guidance-apparatus-side control section 470.

### Speaker 460 is an apparatus that outputs speech.

Guidance-apparatus-side control section 470 causes guidance-apparatus-side storage section 420 to store the detection result of guidance-apparatus-side GPS receiving section 410 (user's position). Furthermore, guidance-apparatus-side control section 470 transmits a request signal periodically (e.g., every second) via a near-field radio signal using guidance-apparatus-side communication section 430. Upon receiving vehicle position information from electronic key 300, guidance-apparatus-side control section 470 causes guidance-apparatus-side storage section 420 to also store the vehicle position information as a response to the request signal.

When the presentation requesting operation is performed, guidance-apparatus-side control section 470 calculates a route from the user's position to the position indicated in the vehicle position information from the user's position and the vehicle position information stored in guidance-apparatus-side storage section 420. Guidance-apparatus-side control section 470 presents guidance information indicating the calculated route. In the present embodiment, guidance-apparatus-side control section 470 outputs the guidance information to display section 450 and outputs guidance information using images. Note that guidance-apparatus-side control section 470 may output the guidance information as speech using speaker 460.

Note that as is clear from the description so far, guidance-apparatus-side communication section 430 constitutes a guidance-apparatus-side receiving section and a guidance-apparatus-side transmitting section of the present invention. Guidance-apparatus-side GPS receiving section 410 constitutes a user position acquiring section of the present invention. Guidance-apparatus-side control section 470 constitutes a route calculation section of the present invention. Display section 450 and speaker 460 constitute an information presenting section of the present invention.

The respective control sections of onboard apparatus 200, electronic key 300, and guidance apparatus 400 can be implemented by, for example, a CPU and a storage medium or the like storing therein a control program. In this case, the functions of the above-described components can by implemented by the CPU executing the control program.

With such a configuration of each apparatus, car finder system 100 can make an announcement of information relating to the parking/stopping position of vehicle 500 using a simple system configuration.

### <Operation of Each Apparatus>

Next, the operation of each apparatus of car finder system 100 will be described.

### <Operation of Onboard apparatus>

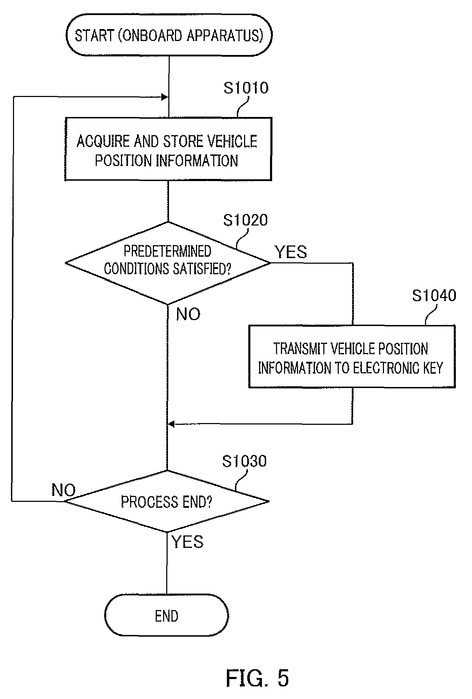

FIG. 5 is a flowchart illustrating an exemplary operation of onboard apparatus 200. The operation of onboard apparatus 200 is controlled mainly by vehicle-side control section 280 as described above.

First, in step S1010, vehicle-side control section 280 acquires vehicle position information using vehicle-side GPS receiving section 260 and causes vehicle-side storage section 270 to store the acquired vehicle position information.

In step S1020, vehicle-side control section 280 determines whether or not the aforementioned predetermined conditions corresponding to the first timing at which the parking/stopping position of vehicle 500 is established are satisfied. When the predetermined conditions are not satisfied (S1020: NO), vehicle-side control section 280 moves the process to step S1030.

In step S1030, vehicle-side control section 280 determines whether or not to end the process. The case in which to end the process is, for example, a case where a predetermined time elapses after ignition is turned off. Upon determining not to end the process (S1030: NO), vehicle-side control section 280 returns the process to step S1010.

On the other hand, when the predetermined conditions are satisfied (S1020: YES), vehicle-side control section 280 advances the process to step S1040 which will be described later.

In step S1040, vehicle-side storage section 270 transmits the vehicle position information stored in vehicle-side storage section 270 to electronic key 300 using vehicle-side communication section 290.

Upon determining to end the process (S1030: YES), vehicle-side control section 280 ends a series of processes.

### <Operation of Electronic Key>

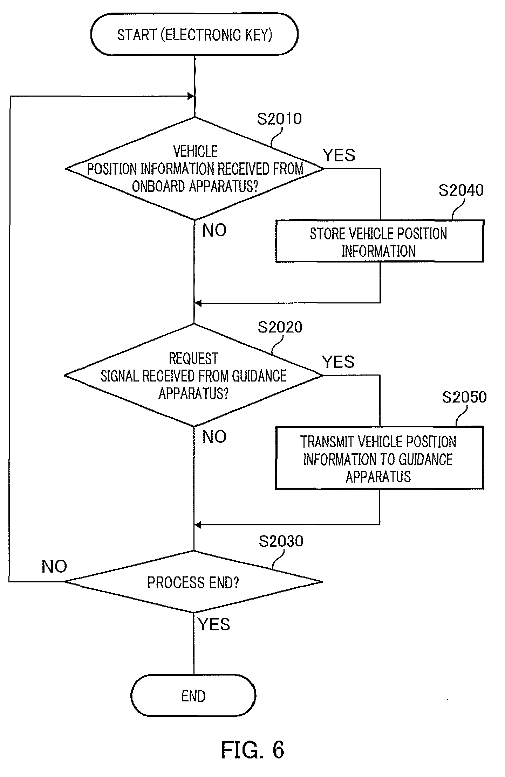

FIG. 6 is a flowchart illustrating an exemplary operation of electronic key 300. Note that illustration and description of the operation of achieving functions of locking or the like of vehicle 500 will be omitted. The operation of electronic key 300 relating to the vehicle position information is mainly controlled by information transfer control section 360.

In step S2010, information transfer control section 360 determines whether or not electronic-key-side receiving section 350 has received the vehicle position information from onboard apparatus 200. When electronic-key-side receiving section 350 has not received the vehicle position information (S2010: NO), information transfer control section 360 advances the process to step S2020.

In step S2020, information transfer control section 360 determines whether or not electronic-key-side receiving section 350 has received a request signal from guidance apparatus 400. When electronic-key-side receiving section 350 has not received any request signal (S2020: NO), information transfer control section 360 advances the process to step S2030.

In step S2030, information transfer control section 360 determines whether or not to end the process. The case in which to end the process is, for example, a case where the capacity of the battery (not shown) provided for electronic key 300 becomes equal to or less than a predetermined value. When information transfer control section 360 determines not to end the process (S2030: NO), information transfer control section 360 returns the process to step S2010.

Note that step S2010 and step S2040, and step S2020 and step S2050 may be processes independent of each other.

On the other hand, when electronic-key-side receiving section 350 has received vehicle position information (S2010: YES), information transfer control section 360 advances the process to step S2040. This reception corresponds to step S1040 of the operation of onboard apparatus 200 shown in FIG. 5. That is, the reception timing is immediately before user 600 leaves vehicle 500, carrying electronic key 300 with him/her.

In step S2040, information transfer control section 360 causes electronic-key-side storage section 310 to store the received vehicle position information and advances the process to step S2020.

When electronic-key-side receiving section 350 receives the request signal (S2020: YES), information transfer control section 360 advances the process to step S2050.

In step S2050, information transfer control section 360 transmits the stored vehicle position information to guidance apparatus 400 using electronic-key-side transmitting section 340 and moves the process to step S2030.

Upon determining to end the process (S2030: YES), information transfer control section 360 ends a series of processes.

### <Operation of Guidance Apparatus>

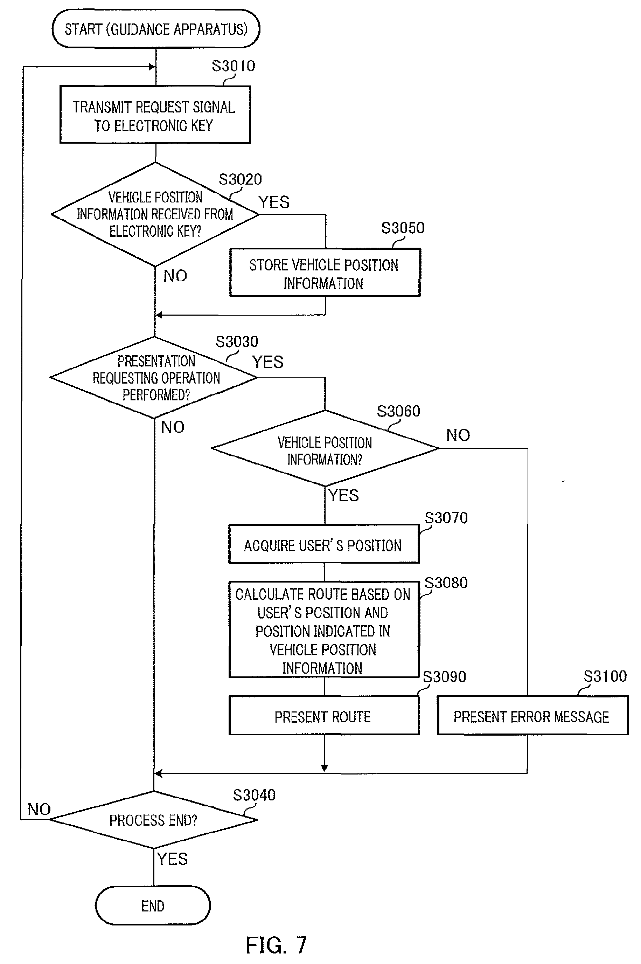

FIG. 7 is a flowchart illustrating an exemplary operation of guidance apparatus 400. The operation of guidance apparatus 400 is controlled mainly by guidance-apparatus-side control section 470 as described above.

First, in step S3010, guidance-apparatus-side control section 470 transmits a request signal to electronic key 300 using guidance-apparatus-side communication section 430. This transmission corresponds to step S2020 of the operation of electronic key 300 shown in FIG. 6.

In step S3020, guidance-apparatus-side control section 470 determines whether or not guidance-apparatus-side communication section 430 has received vehicle position information from electronic key 300. This reception corresponds to step S2050 of the operation of electronic key 300 shown in FIG. 6. When guidance-apparatus-side communication section 430 has not received the vehicle position information (S3020: NO), guidance-apparatus-side control section 470 advances the process to step S3030.

In step S3030, guidance-apparatus-side control section 470 determines whether or not guidance-apparatus-side operation section 440 has performed a presentation requesting operation. When guidance-apparatus-side operation section 440 has not performed any presentation requesting operation (S3030: NO), guidance-apparatus-side control section 470 advances the process to step S3040.

In step S3040, guidance-apparatus-side control section 470 determines whether or not user 600 has issued an instruction to end the process via an operation of turning off a power supply or the like. When user 600 has not issued an instruction to end the process (S3040: NO), guidance-apparatus-side control section 470 returns the process to step S3010.

On the other hand, when guidance-apparatus-side communication section 430 has received the vehicle position information (S3020: YES), guidance-apparatus-side control section 470 advances the process to step S3050.

In step S3050, guidance-apparatus-side control section 470 causes guidance-apparatus-side storage section 420 to store the received vehicle position information and advances the process to step S3030.

When the presentation requesting operation has been performed (S3030: YES), guidance-apparatus-side control section 470 advances the process to step S3060.

In step S3060, guidance-apparatus-side control section 470 determines whether or not guidance-apparatus-side storage section 420 stores the vehicle position information. When the vehicle position information is stored (S3060: YES), guidance-apparatus-side control section 470 advances the process to step S3070.

In step S3070, guidance-apparatus-side control section 470 acquires the user's position from guidance-apparatus-side GPS receiving section 410 or from guidance-apparatus-side storage section 420.

In step S3080, guidance-apparatus-side control section 470 calculates a route from the user's current position to the parking/stopping position of vehicle 500 based on the user's position and the position indicated in the vehicle position information.

In step S3090, guidance-apparatus-side control section 470 presents to user 600, guidance information that indicates the calculated route together with the user's current position and the parking/stopping position of vehicle 500 using display section 450, and advances the process to step S3040.

When the vehicle position information is not stored (S3060: NO), guidance-apparatus-side control section 470 advances the process to step S3100.

In step S3100, guidance-apparatus-side control section 470 presents an error message indicating that the guidance information cannot be presented to user 600 using display section 450 and advances the process to step S3040.

When an end of the process is instructed (S3040: YES), guidance-apparatus-side control section 470 ends a series of processes.

Through such an operation of each apparatus, car finder system 100 can easily implement route guidance from the position of user 600 to the parking/stopping position of vehicle 500 as described above.

### <Contents of Guidance Information>

Next, a specific example of guidance information will be described.

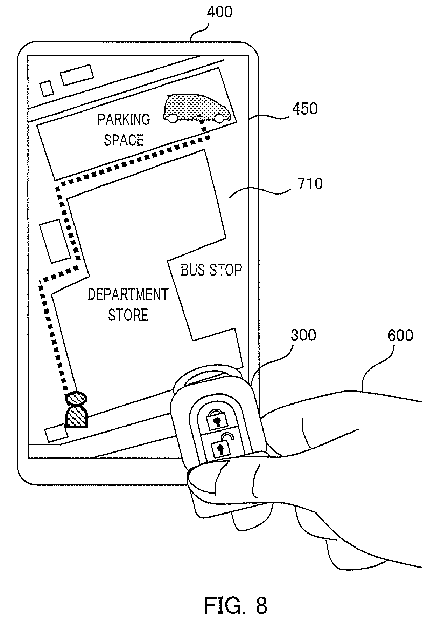

When guidance apparatus 400 is a smartphone as an example, FIG. 8 is a diagram illustrating an example of guidance information displayed on the display screen of this smartphone. Here, suppose a case where user 600 parks vehicle 500 in a plane parking space next to a department store.

User 600 places electronic key 300 over guidance apparatus 400 as the smartphone, for example, at an exit of the department store. Electronic key 300 then receives a request signal from guidance apparatus 400 and returns vehicle position information. Next, when user 600 performs a presentation requesting operation, guidance apparatus 400 displays guidance information (plan view) 710 for guiding the route from the current position to the position of vehicle 500 together with map information on display section 450 as shown in FIG. 8. Note that guidance apparatus 400 generates such guidance information 710 using map data acquired via the Internet, for example.

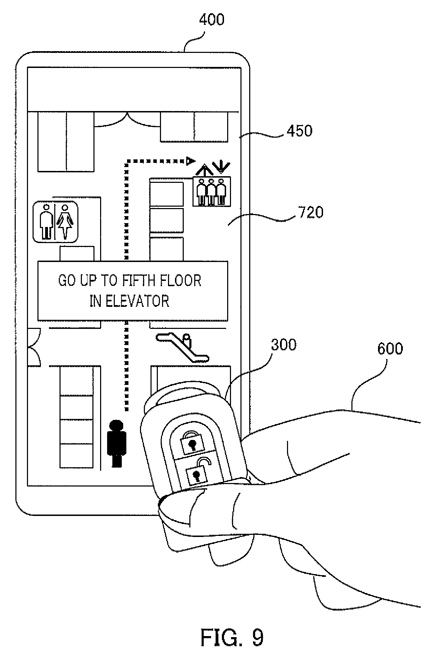

FIG. 9 is a diagram illustrating another example of the guidance information displayed on guidance apparatus 400 as the smartphone. Here, suppose a case where user 600 parks vehicle 500 at a parking space provided on the fifth floor of a shopping center (a set of stores).

User 600 places electronic key 300 over guidance apparatus 400 as the smartphone at a store in the shopping center, for example, and then performs a presentation requesting operation. Then, guidance apparatus 400 displays guidance information (store floor map and message) 720 for guiding a route from the current position to the position of vehicle 500 on display section 450 as shown in FIG. 9. Note that guidance apparatus 400 generates such guidance information 720 using information acquired via, for example, radio LAN in the shopping center.

Since such guidance information 710 or 720 is displayed, user 600 can know the route from the current position to the parking/stopping position of vehicle 500 and can speedily return to vehicle 500.

### <Effects of Present Embodiment>

As described above, taking advantage of electronic key 300 normally carried by user 600 of vehicle 500, car finder system 100 according to the present embodiment transfers information from onboard apparatus 200 to guidance apparatus 400 and presents guidance information on guidance apparatus 400. In this way, car finder system 100 according to the present embodiment can make an announcement of information relating to the parking/stopping position of vehicle 500 in a simple system configuration.

### <Other Examples of Guidance Apparatus>

Note that a case has been described in the above embodiment where the guidance apparatus is a smartphone, but the present invention is not limited to this case. The guidance apparatus may be one of other various types of portable terminals or a terminal placed beforehand at a place where the user can access (hereinafter referred to as "on-street terminal").

When the guidance apparatus is an on-street terminal, user 600 can receive presentation of guidance information without carrying the portable terminal according to the present invention. Since portability is not required, it is possible to provide a large display section and give more specific guidance information.

However, when the guidance apparatus is an on-street terminal, the guidance apparatus needs to include an apparatus position storage section that stores the position of the guidance apparatus. Furthermore, the guidance apparatus needs to include a route calculation section that calculates a route from the user's position to the position indicated in the vehicle position information assuming the stored position as the user's position.

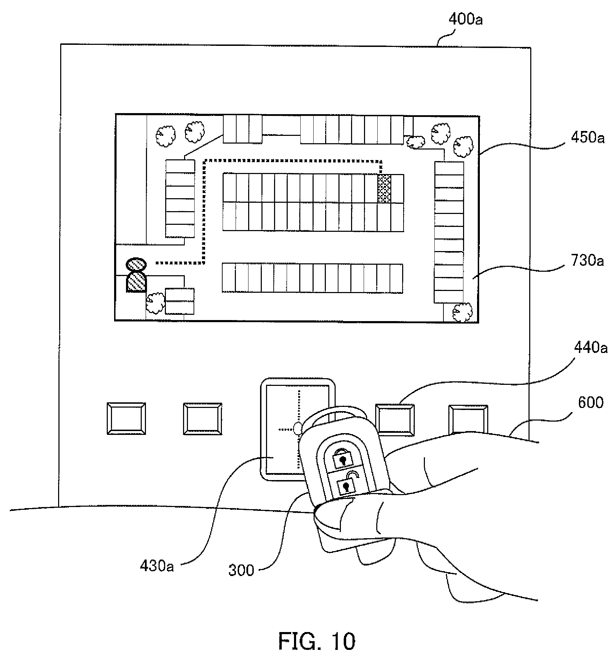

FIG. 10 is a diagram illustrating an example of guidance information displayed on a display screen of this guidance terminal when the guidance apparatus is a guidance terminal installed on the street in a shopping center or the like. Here, suppose a case where the guidance apparatus is placed at a doorway of a plane parking space.

User 600 places electronic key 300 over guidance-apparatus-side communication section 430a of guidance apparatus 400a and then performs a presentation requesting operation using guidance-apparatus-side operation section 440a. Then, guidance apparatus 400a displays guidance information (plan view) 730a that guides the route from the current position to the position of vehicle 500 on display section 450a as shown in FIG. 10. Note that guidance apparatus 400a generates such guidance information 730a using, for example, map data stored in advance.

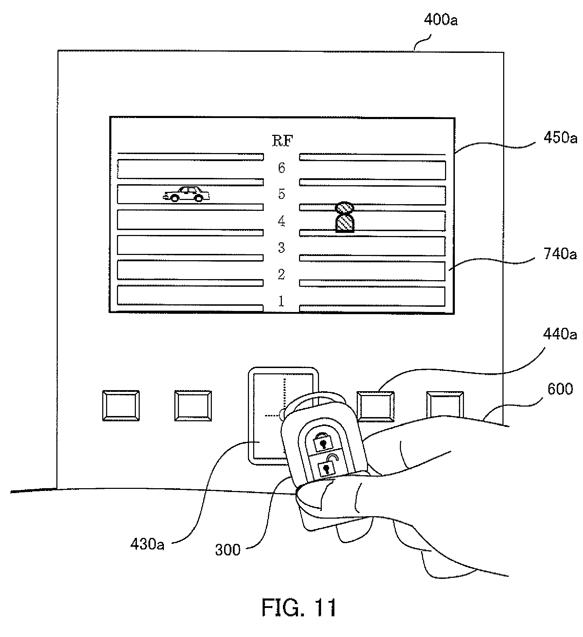

FIG. 11 is a diagram illustrating an example of guidance information displayed on the guidance apparatus of the on-street terminal. Here, suppose a case where the guidance apparatus is installed on each floor of a multistory parking space and vehicle 500 is parked on the fifth floor.

User 600 places electronic key 300 over guidance-apparatus-side communication section 430a of guidance apparatus 400a provided, for example, on the fourth floor, and then performs a presentation requesting operation using guidance-apparatus-side operation section 440a. In this example, the floor corresponding to the current position of user 600 is different from the floor corresponding to the parking position of vehicle 500. Therefore, guidance apparatus 400a shows the floor (fifth floor) on which user 600 is located and the floor (fourth floor) on which vehicle 500 is located on display section 450a as shown in FIG. 11 and displays guidance information (elevation view) 740a indicating that user 600 needs to go up the stairs to the next floor.

In the case of a plane parking space, it is relatively easy to remember an approximate parking position from surrounding landscape, whereas in the case of a multistory parking space, all floors have identical structures, so that the user often forget the floor on which the vehicle is parked. Therefore, it is quite convenient that guidance information 740a as shown in FIG. 11 can be presented.

### <Other Examples of Guidance Information>

Contents of guidance information and the presentation technique are not limited to the above-described examples.

The guidance apparatus may present information indicating the route from the user's position to the parking/stopping position of the vehicle using, for example, Braille characters or speech. The guidance information may be presented in a plurality of stages; guiding a movement to the fifth floor first, and guiding the direction of the parking/stopping position on the fifth floor and the like. The guidance information may indicate only part of the route from the user's position to the parking/stopping position of the vehicle. Note that speech is a concept including not only voice but also sound information such as beep tone.

The guidance information need not always indicate a route. For example, the guidance information may indicate only the parking/stopping position together with a map or indicate only the route from the user's position to the parking/stopping position together with a map. The information relating to the parking/stopping position of the vehicle all corresponds to "information relating to the parking/stopping position of the vehicle."

### <Other Examples of Transmission/Reception Timing>

Transmission/reception timing of vehicle position information and a request signal is not limited to the above-described examples.

When ignition is not performed, for example, when vehicle 500 is an electric vehicle (EV), onboard apparatus 200 may determine whether or not the above-described first timing comes based on an operation of a hard key.

For example, onboard apparatus 200 may periodically transmit vehicle position information, for example, every minute. In this case, electronic key 300 may store only latest vehicle position information.

For example, guidance apparatus 400 transmits a request signal only when user 600 performs a predetermined operation. That is, guidance-apparatus-side communication section 430 transmits a request signal to electronic key 300 when guidance-apparatus-side operation section 440 performs a predetermined operation, and the second timing may include timing at which electronic-key-side receiving section 350 receives the request signal. In this case, guidance apparatus 400 may present guidance information without waiting until a separate presentation requesting operation is performed.

Electronic key 300 may request onboard apparatus 200 and guidance apparatus 400 to establish communication using a predetermined operation performed on electronic-key-side operation section 320 of electronic key 300 as a trigger. That is, the above-described second timing may include timing at which electronic-key-side operation section 320 performs a predetermined operation.

### <Other Examples of Position Acquiring Technique>

The technique of acquiring the parking/stopping position of the vehicle and the user's position is not limited to the above-described examples. For example, onboard apparatus 200 may detect a relative position from a reference point and detect the parking/stopping position of the vehicle using, for example, a gyro sensor and a vehicle speed sensor.

### <Other Configuration Examples>

Car finder system 100 may transmit and/or receive vehicle position information and a request signal between the respective apparatuses using a communication scheme other than near-field radio communication such as medium-distance radio communication or wired communication. Electronic key 300 need not always transfer vehicle position information using a functional section used for locking of vehicle 500. For example, electronic key 300 may include a transmission circuit that transmits vehicle position information aside from the transmission circuit that transmits a signal for locking or the like.

An electronic key according to this disclosure is an electronic key used for locking and unlocking a vehicle, the key including: an electronic-key-side receiving section that receives vehicle position information indicating a position at which the vehicle is parked/stopped from an onboard apparatus to be mounted on the vehicle; an electronic-key-side storage section that stores the received vehicle position information; and an electronic-key-side transmitting section that transmits the vehicle position information stored in the electronic-key-side storage section to a guidance apparatus capable of presenting position information.

In the electronic key, the electronic-key-side receiving section may be communicable with the guidance apparatus, and the electronic-key-side transmitting section may transmit the vehicle position information when the electronic-key-side receiving section receives a request signal from the guidance apparatus.

The electronic key may further include an electronic-key-side operation section that receives a predetermined operation, in which the electronic-key-side transmitting section may transmit the vehicle position information when the electronic-key-side operation section performs the predetermined operation.

An onboard apparatus according to this disclosure is an onboard apparatus that communicates with the electronic key, the apparatus including a vehicle-side transmitting section that transmits the vehicle position information to the electronic key at first timing at which the parking/stopping position of the vehicle is established.

The onboard apparatus may further include a vehicle-side timing detection section that detects the first timing, in which the first timing may be timing at which at least one of predetermined conditions is satisfied, the predetermined conditions being conditions: that a vehicle speed decreases to a predetermined value or below; that an engine of the vehicle stops; that the vehicle is locked from outside the vehicle by the electronic key; that the parking brake becomes effective; and that a shift position is at a parking position.

A guidance apparatus according to this disclosure is a guide apparatus that communicates with the electronic key, the apparatus including: a guidance-apparatus-side transmitting section that transmits, to the electronic key, a request signal for requesting transmission of the vehicle position information at predetermined second timing; a guidance-apparatus-side receiving section that receives the vehicle position information from the electronic key; and an information presenting section that presents information relating to the vehicle position based on a position indicated in the vehicle position information received by the guidance-apparatus-side receiving section.

In the guidance apparatus, the second timing may be timing at which the electronic key comes closer to the guidance apparatus within a predetermined distance from the guidance apparatus.

The guidance apparatus may further include a guidance-apparatus-side operation section that receives a predetermined operation, in which the second timing may be timing at which the guidance-apparatus-side operation section performs the predetermined operation.

The guidance apparatus may further include: a position acquiring section that acquires a current position of the guidance apparatus; and a route calculation section that calculates a route from the current position to the position indicated in the vehicle position information, in which the information presenting section may output information indicating the route calculated by the route calculation section, using an image or speech.

The guidance apparatus may be a portable terminal capable of being carried around by the user carrying the electronic key or an on-street terminal installed on a street accessible by the user.

In the guidance apparatus, the information presenting section may present the information relating to the vehicle position as three-dimensional position information.

A car finder system according to this disclosure includes: an onboard apparatus to be mounted on a vehicle; an electronic key used for locking and unlocking the vehicle; and a guidance apparatus that is capable of being carried around or accessible by a user carrying the electronic key, in which the onboard apparatus includes: a vehicle position acquiring section that acquires vehicle position information indicating a position at which the vehicle is parked/stopped; and a vehicle-side transmitting section that transmits the acquired vehicle position information to the electronic key, the electronic key includes: an electronic-key-side receiving section that receives the vehicle position information transmitted from the onboard apparatus; an electronic-key-side storage section that stores the received vehicle position information; and an electronic-key-side transmitting section that transmits the vehicle position information stored in the electronic-key-side storage section to the guidance apparatus, and the guidance apparatus includes: a guidance-apparatus-side receiving section that receives the vehicle position information transmitted from the electronic key; and an information presenting section that presents information relating to the vehicle position based on the position indicated in the vehicle position information received by the guidance-apparatus-side receiving section.

The disclosure of the specification, drawings, and abstract in Japanese Patent Application No. 2013-081341 filed on April 9, 2013 is incorporated herein by reference in its entirety.

### Industrial Applicability

The present invention is useful as an electronic key, an onboard apparatus, a guidance apparatus and a car finder system enabling an announcement of information relating to a parking/stopping position of a vehicle in a simple system configuration.

### Reference Signs List

100 Car finder system
200 Onboard apparatus
210 Vehicle speed sensor
220 Door switch
230 Ignition switch
240 Parking brake operation section
250 Shift operation section
260 Vehicle-side GPS receiving section
270 Vehicle-side storage section
280 Vehicle-side control section
290 Vehicle-side communication section
300 Electronic key
310 Electronic-key-side storage section
320 Electronic-key-side operation section
330 Electronic-key-side control section
340 Electronic-key-side transmitting section
350 Electronic-key-side receiving section
360 Information transfer control section
400, 400a Guidance apparatus
410 Guidance-apparatus-side GPS receiving section
420 Guidance-apparatus-side storage section
430, 430a Guidance-apparatus-side communication section
440, 440a Guidance-apparatus-side operation section
450, 450a Display section
460 Speaker
470 Guidance-apparatus-side control section
500 Vehicle
600 User

## Claims

1. An electronic key used for locking and unlocking a vehicle, the key comprising:
an electronic-key-side receiving section that receives vehicle position information indicating a position at which the vehicle is parked/stopped from an onboard apparatus to be mounted on the vehicle;
an electronic-key-side storage section that stores the received vehicle position information; and
an electronic-key-side transmitting section that transmits the vehicle position information stored in the electronic-key-side storage section to a guidance apparatus capable of presenting position information.

2. The electronic key according to claim 1, wherein
the electronic-key-side receiving section is communicable with the guidance apparatus, and
the electronic-key-side transmitting section transmits the vehicle position information when the electronic-key-side receiving section receives a request signal from the guidance apparatus.

3. The electronic key according to claim 1 or 2, further comprising an electronic-key-side operation section that receives a predetermined operation, wherein the electronic-key-side transmitting section transmits the vehicle position information when the electronic-key-side operation section performs the predetermined operation.

4. An onboard apparatus that communicates with the electronic key according to any one of claims 1 to 3, the apparatus comprising a vehicle-side transmitting section that transmits the vehicle position information to the electronic key at first timing at which the parking/stopping position of the vehicle is established.

5. The onboard apparatus according to claim 4, further comprising a vehicle-side timing detection section that detects the first timing, wherein the first timing is timing at which at least one of predetermined conditions is satisfied, the predetermined conditions being conditions: that a vehicle speed decreases to a predetermined value or below; that an engine of the vehicle stops; that the vehicle is locked from outside the vehicle by the electronic key; that the parking brake becomes effective; and that a shift position is at a parking position.

6. A guidance apparatus that communicates with the electronic key according to any one of claims 1 to 3, the apparatus comprising:
a guidance-apparatus-side transmitting section that transmits, to the electronic key, a request signal for requesting transmission of the vehicle position information at predetermined second timing;
a guidance-apparatus-side receiving section that receives the vehicle position information from the electronic key; and
an information presenting section that presents information relating to the vehicle position based on a position indicated in the vehicle position information received by the guidance-apparatus-side receiving section.

7. The guidance apparatus according to claim 6, wherein the second timing is timing at which the electronic key comes closer to the guidance apparatus within a predetermined distance from the guidance apparatus.

8. The guidance apparatus according to claim 6 or 7, further comprising a guidance-apparatus-side operation section that receives a predetermined operation, wherein the second timing is timing at which the guidance-apparatus-side operation section performs the predetermined operation.

9. The guidance apparatus according to any one of claims 6 to 8, further comprising:
a position acquiring section that acquires a current position of the guidance apparatus; and
a route calculation section that calculates a route from the current position to the position indicated in the vehicle position information, wherein
the information presenting section outputs information indicating the route calculated by the route calculation section, using an image or speech.

10. The guidance apparatus according to any one of claims 6 to 9, wherein the guidance apparatus is a portable terminal capable of being carried around by the user carrying the electronic key or an on-street terminal installed on a street accessible by the user.

11. The guidance apparatus according to any one of claims 6 to 10, wherein the information presenting section presents the information relating to the vehicle position as three-dimensional position information.

12. A car finder system comprising:
an onboard apparatus to be mounted on a vehicle;
an electronic key used for locking and unlocking the vehicle; and
a guidance apparatus that is capable of being carried around or accessible by a user carrying the electronic key, wherein
the onboard apparatus includes:
a vehicle position acquiring section that acquires vehicle position information indicating a position at which the vehicle is parked/stopped; and
a vehicle-side transmitting section that transmits the acquired vehicle position information to the electronic key,
the electronic key includes:
an electronic-key-side receiving section that receives the vehicle position information transmitted from the onboard apparatus;
an electronic-key-side storage section that stores the received vehicle position information; and
an electronic-key-side transmitting section that transmits the vehicle position information stored in the electronic-key-side storage section to the guidance apparatus, and
the guidance apparatus includes:
a guidance-apparatus-side receiving section that receives the vehicle position information transmitted from the electronic key; and
an information presenting section that presents information relating to the vehicle position based on the position indicated in the vehicle position information received by the guidance-apparatus-side receiving section.
